# EUROPÄISCHE PATENTANMELDUNG

(11) **EP 1 166 654 A1**
(43) Veröffentlichungstag der Anmeldung: **02.01.2002**
(21) Anmeldenummer: 00114204.1
(22) Anmeldetag: 01.07.2000
(51) Int. Cl.: A23L 1/32, A23L 1/01, A23B 5/01, A23B 5/06

(54) **Verfahren zum Garen von Eiern durch Hochfrequenzerwärmung**

(71) Anmelder: GNT Gesellschaft für Nahrungsmitteltechnologie mbH, 52072 Aachen (DE)
(72) Erfinder: Hoeck, Horst, Dr.-Ing., 52074 Aachen (DE)
(74) Vertreter: Albrecht, Rainer Harald, Dr.-Ing.

(57) **Zusammenfassung**

Die Erfindung betrifft ein Verfahren zum Garen von Eiern durch Hochfrequenzerwärmung. Erfindungsgemäß wird an das rohe Ei vor dem Garen eine Schrumpffolie aus Kunststoff zur Verstärkung der Eischale straff angelegt.

## Beschreibung

Die Erfindung betrifft ein Verfahren zum Garen von Eiern durch Hochfrequenzerwärmung.

Ein solches Verfahren ist aus EP-A 0 992 197 bekannt. Das zu garende Ei wird in einem Feld aus im Wesentlichen parallelen Feldlinien einer zylindrischen, an einen Hochfrequenzgenerator angeschlossenen Feldspule erhitzt und während der Hochfrequenzerhitzung um eine zu den Feldlinien orthogonale Achse gedreht oder geschwenkt. Mit der von außen nach innen abnehmende Stromdichteverteilung des im Ei induzierten Heizstromes wird eine durch Erhitzen verfestigte Hülle aus Eiweiß und ein erwärmter, noch weitgehend unverfestigter Kern aus Eigelb erzeugt. Mit dem bekannten Verfahren ist es möglich, Frühstückseier mit reproduzierbarer Konsistenz innerhalb einer sehr kurzen Garzeit zuzubereiten. Noch ungelöst ist allerdings das Problem, dass hin und wieder ein Ei, dessen Eischale sehr dünn ist oder Risse aufweist, platzt und dabei der Garraum des zur Hochfrequenzerhitzung eingesetzten Gerätes verschmutzt wird.

Nach einem in DE-A 199 42 357 beschriebenen Verfahren zum Garen von Eiern erfolgt die Hochfrequenzerwärmung in einem Mikrowellenheizgerät, dessen Heizleistung während des Garens stufenweise reduziert wird. Während des Garvorganges wird das Ei mit vortemperiertem, heißem Wasser besprüht. Auch bei diesem Verfahren besteht die Gefahr, dass beim Platzen eines Eies der Garraum des Gerätes verschmutzt wird.

Der Erfindung liegt die Aufgabe zugrunde, bei einem Verfahren zum Garen von Eiern durch Hochfrequenzerwärmung sicherzustellen, dass der Garraum des Gerätes nicht verschmutzt wird, wenn die Schale des Eies während des Garvorganges reißt.

Die Aufgabe wird erfindungsgemäß dadurch gelöst, dass an das rohe Ei vor dem Garen eine Schrumpffolie aus Kunststoff zur Verstärkung der Eischale straff angelegt wird. Die Schrumpffolie wird durch eine kurzzeitige Erwärmung an dem rohen Ei fixiert und gestrafft. Die Fixierung kann bei Beginn des Garvorganges in dem zur Hochfrequenzerwärmung eingesetzten Heizgerät erfolgen. Vorzugsweise wird die Schrumpffolie jedoch bereits vorher, und zwar bereits beim Eiererzeuger, angelegt. Die an dem Ei straff anliegende Schrumpffolie verstärkt die Eischale im Sinne einer Armierungsschicht, so dass während des Garvorganges auch bei dünner Eischale oder Defekten in der Einschale Risse seltener auftreten. Aufgrund der hohen Zähigkeit der Schrumpffolie ist insbesondere ausgeschlossen, dass das von der Schrumpffolie umhüllte Ei während der Hochfrequenzerwärmung platzen und der Garraum des Heizgerätes durch Eiweiß verschmutzt werden kann.

Eine vollständige Kapselung des zu garenden Eies mit der Schrumpffolie ist nicht erforderlich. Bei Eiern, die als Frühstückseier verzehrt werden sollen, sollte eine obere uppe des Eies nicht von der Schrumpffolie bedeckt sein, damit das Ei ohne Entfernen der Schrumpffolie an der Oberseite geöffnet und der Inhalt des Eies ausgelöffelt werden kann. Gemäß einer bevorzugten Ausführung der Erfindung wird eine Schrumpffolie verwendet, die als Banderole ausgebildet ist. Eine andere Ausführung der Erfindung sieht vor, dass das Ei unterseitig und umfangsseitig von der Schrumpffolie umhüllt wird, wobei der Kopf des Eies frei zugänglich bleibt.

Die Schrumpffolie kann ferner als Informationsträger verwendet werden und mit Informationen über das Lege- und/oder Verfallsdatum bedruckt und/oder mit Werbeaufdrucken versehen sein.

Die Hochfrequenzerhitzung eines mit der Schrumpffolie verstärkten rohen Eies kann nach dem in EP-A 0 992 197 beschriebenen Verfahren erfolgen. Das mit der Schrumpffolie versehene Ei wird im elektromagnetischen Wechselfeld einer Spulenanordnung, die mindestens eine an einen Hochfrequenzgenerator angeschlossene Feldspule aufweist, induktiv erhitzt, wobei mit der von außen nach innen abnehmenden Stromdichteverteilung des im Ei induzierten Heizstromes eine durch Erhitzen verfestigte Hülle aus Eiweiß und ein erwärmter, noch weitgehend unverfestigter Kern aus Eigelb erzeugt wird. Die an der Außenseite des Eies straff anliegende Schrumpffolie beeinträchtigt den Garvorgang nicht. Vorzugsweise wird in einem Frequenzbereich zwischen 10 und 50 MHz gearbeitet, wobei eine Frequenz von ca. 27 MHz sich als besonders günstig erweist. Vorzugsweise wird das mit einer straff anliegenden und auf diese Weise verstärkte Ei in einem Feld aus im wesentlichen parallelen Feldlinien, einer zylindrischen Feldspule erhitzt, und während der Hochfrequenzerhitzung um eine zu den Feldlinien orthogonale Achse gedreht oder geschwenkt. Alternativ kann auch die Feldspule um eine zu den Feldlinien orthogonale Achse Schwenkbewegungen um das Ei ausführen. Schließlich besteht die Möglichkeit, das Ei in einem Feld aus sich kreuzenden Feldlinien zu erhitzen und zu diesem Zweck im Kreuzungsmittelpunkt der Feldlinienbündel zu positionieren. Während der Hochfrequenzerhitzung kann das Ei durch oberseitige Aufgabe eines vorgeheizten Flüssigkeitsstromes mit Wasser benetzt werden.

Die erfindungsgemäße Lehre ist ferner auch bei dem in DE-A 199 42 357 beschriebene Verfahren, bei dem ein Mikrowellenheizgerät zum Garen der Eier verwendet wird, einsetzbar. Das zu garende rohe Ei wird mit einer straff anliegenden Schrumpffolie in einem Behälter, der aus einem für hochfrequente elektromagnetische Wellen durchlässigen Material besteht und im Heizraum des Mikrowellengerätes angeordnet ist, mit heißem Wasser beaufschlagt und gleichzeitig mit Mikrowellen im Frequenzbereich zwischen 10³ und 10⁴ MHz erhitzt. Die Heizleistung des Mikrowellengerätes wird während des Garens stufenweise reduziert, wobei zweckmäßig eine Anfangsleistung von mehr als 500 Watt eingestellt wird und nach einer Garzeit von weniger als einer Minute eine Umschaltung auf eine Endleistung von weniger als 300 Watt erfolgt, die während der verbleibenden Garzeit konstant beibehalten wird. Das mit der Schrumpffolie versehene, zu garende Ei wird während des Garvorganges entweder in ein Wasserbad eingetaucht oder von heißem Wasser überströmt, welches aus einem temperiertem Vorratsbehälter zugeführt wird.

## Patentansprüche

1. Verfahren zum Garen von Eiern durch Hochfrequenzerwärmung, **dadurch gekennzeichnet, dass** an das rohe Ei vor dem Garen eine Schrumpffolie aus Kunststoff zur Verstärkung der Eischale straff angelegt wird.

2. Verfahren nach Anspruch 1, **dadurch gekennzeichnet, dass** die Schrumpffolie als Banderole ausgebildet ist.

3. Verfahren nach Anspruch 1. **dadurch gekennzeichnet, dass** das Ei unterseitig und umfangseitig von der Schrumpffolie umhüllt wird, wobei der Kopf des Eies frei zugänglich bleibt.

4. Verfahren nach einem der Ansprüche 1 bis 3, **dadurch gekennzeichnet, dass** die verwendete Schrumpffolie mit Informationen über das Lege- und/oder Verfallsdatum bedruckt und/oder mit Werbeaufdrucken versehen wird.
